# EUROPEAN PATENT SPECIFICATION

(11) **EP 1 950 408 B1**
(45) Date of publication and mention of the grant of the patent: **10.08.2011**
(21) Application number: 07001581.3
(22) Date of filing: 25.01.2007
(51) Int. Cl.: F02M 35/16, F02M 35/10

(54) **Air intake device for air cleaner of engine**
Lufteinlassvorrichtung für einen Motorluftfilter
Dispositif d'admission d'air du filtre à air d'un moteur

(43) Date of publication of application: 30.07.2008
(73) Proprietor: Kwang Yang Motor Co., Ltd., San-Min Dist., Kaohsiung City (TW)
(72) Inventor: Cheng, Wen-Tso, San-Min District Koahsiung City Taiwan (JP)
(74) Representative: Horak, Michael

(56) References cited:
- EP-A- 1 296 036
- FR-A- 2 879 971
- JP-A- 1 223 091
- JP-A- 3 271 089
- JP-A- 4 292 279
- JP-A- 2004 231 172

## Description

### (a) Technical Field of the Invention

The present invention relates to an air intake device for an air cleaner of an engine, and in particular to an air intake device that reduces the amount of dusts and ashes entraining air flowing into the air cleaner.

### (b) Description of the Prior Art

Motorcycles have advantages, such as being small in size, having mobility, and being easy to par. All these make the motorcycles a very popular transportation and leisure activity. With such a large market all over the world, most motorcycle manufacturers are all devoted themselves to development of advanced motorcycle parts that are safer and of improved performance. One major concern of the motorcycle parts is the improvement of power system that comprises an internal combustion engine in which a mixture of fuel and air that is formed in a carburetor is combusted to generate power that drives the wheels of the motorcycle. The air that forms the mixture with the fuel is drawn from the surrounding into an air cleaner to filter out dusts and ashes entraining the airflow and the cleaned air is then fed to the carburetor.

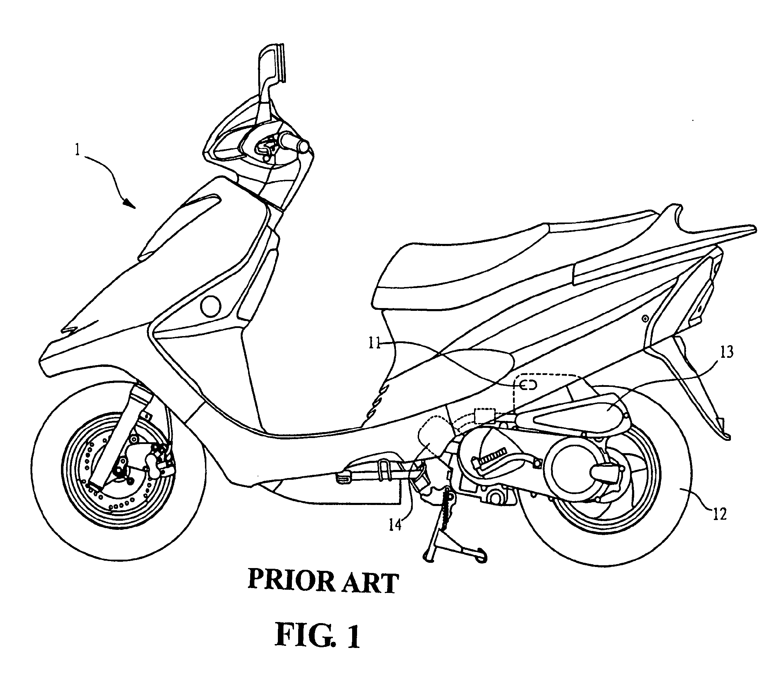

An example of a conventional scooter type motorcycle is shown in Figure 1 of the attached drawings and is generally designated with reference numeral 1. In the conventional scooter motorcycle, an inlet for air, which is generally designated at 11, is arranged at a location close to a rear wheel 12 of the motorcycle 1. Due to the low position of the air inlet 11, when the rear wheel 12 is rotated, dusts and ashes that are originally on the ground are lifted by the rotation of the wheel 12 and entrain the air flowing into the air inlet 11. Consequently, the air drawn into the air cleaner 13 contains a great amount of dusts and ashes. The air cleaner 13 that must filter out the great amount of dusts and ashes for a long term is of shorter service life. In worse conditions, the dusts and ashes may accidentally get into the engine 14, causing undesired wearing of moving parts of the engine 14. In addition, the great amount of dusts and ashes may gradually block the air cleaner, which in tum reduces the amount of air passing therethrough and eventually affecting the performance of the engine 14.

A further example of a conventional scooter type motorcycle is shown in JP-A-2004231172. Thus, the present invention is aimed to overcome the drawback of the conventional air cleaning system of the scooter type motorcycle.

### SUMMARY OF THE INVENTION

The primary purpose of the present invention is to solve the problems of drawing highly contaminated air entrained with a great amount of dusts and ashes lifted upward by operation of a scooter type motorcycle into an air cleaner through an air inlet that is arranged at a low position close to a wheel of the scooter type motorcycle, and consequently overcoming the drawbacks of poor engine performance, reduced service life of the air cleaner, and potential damage to engine cylinder.

To achieve the objective, in accordance with the present invention, an air intake device is provided for mounting to an air cleaner of an engine, comprising a box-like hollow body forming a primary air inlet and a barrier wall opposing the primary air inlet. The body is connected to and in fluid communication with the air cleaner by a tube. The air intake device is arranged at a location corresponding to an air entrance that is defined by a curved zone that is extended from intersections of rearward extensions of side edges of a front cover of a scooter type motorcycle comprising the engine and side edges of side covers of the scooter type motorcycle in a frontward direction toward a central cover, whereby the air intake device is located away from where dusts are lifted by movement of the scooter type motor to reduce amount of contaminated air flowing into the air cleaner.

Another objective of the present invention is to provide an air intake device comprising a box-like hollow body having one side forming a secondary air inlet, which, when a primary air inlet is blocked or jammed by foreign objects, serves as a supplemental supply of air to the air cleaner.

A further objective of the present invention is to provide an air intake device comprising a box-like hollow body having a bottom in which a water drain hole is defined for discharging condensed water or residual water formed inside the body.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

The present invention will be apparent to those skilled in the art by reading the following description of a referred embodiment thereof, with reference to the attached drawings, wherein:
Figure 1 is a side elevational view of a conventional scooter type motorcycle;
Figure 2 is a side elevational view of a scooter type motorcycle in which an air intake device constructed in accordance with the present invention is embodied;
Figure 3 is an exploded view of the air intake device of the present invention; and
Figure 4 is a top plan view of the scooter type motorcycle of Figure 2, illustrating the location where the air intake device of the present invention is arranged.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

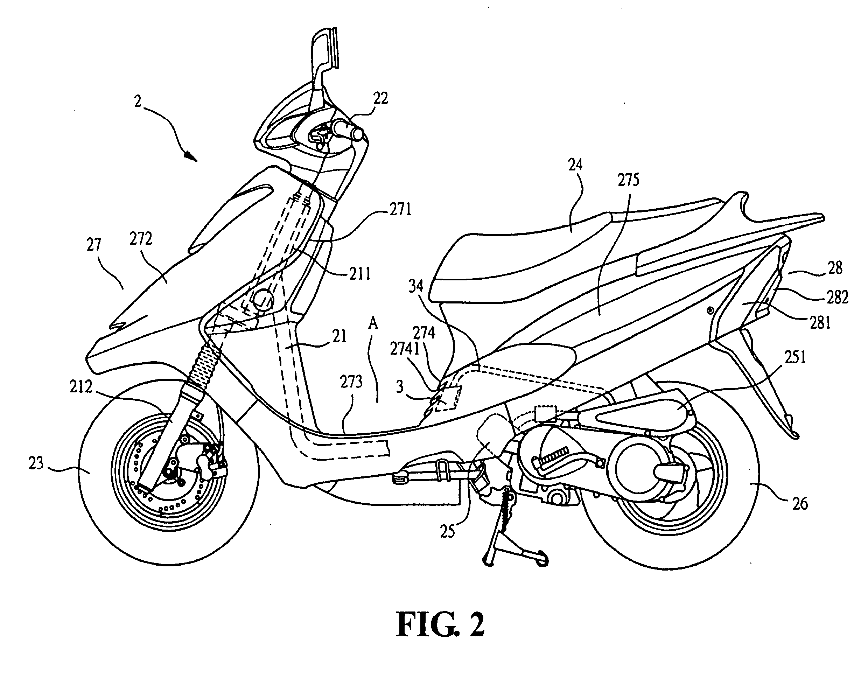

With reference to the drawings and in particular to Figure 2, an air intake device in accordance with the present invention, generally designated with reference numeral 3, is constructed for an air cleaner of an engine of a scooter type motorcycle, which is broadly designated at 2. The scooter type motorcycle 2 comprises a frame 21, a handgrip 22, a front wheel 23, a seat 24, an engine 25, a rear wheel 26, and an outer cover enclosure 27.

The hand grip 22 is mounted at a front portion of the frame 21 in a rotatable manner.

A steering column 211 is arranged below and mounted to the hand grip 22. A front shock absorber 212 is mounted to and located below the steering column 211. The front wheel 23 is rotatably mounted to the front shock absorber 212.

The seat 24 is mounted to top of the frame 21. The engine, which is designated at 25, is arranged at a location below the seat 24 and is in driving coupling to the rear wheel 26.

The outer cover enclosure 27 comprises a knee shielding cover 271 arranged at the front portion of the scooter type motorcycle 2, a front cover 272 fixed above the knee shielding cover 271, a foot rest cover 273 located below the knee shielding cover 271, a central cover 274 opposite to the knee shielding cover 271, and a pair of side covers 275 shielding opposite sides of a rear portion of the scooter type motorcycle 2.

A tail light set 28 is mounted to tail ends (rear ends) of the side covers 275, including a tail-side signal lights 281 and a tail light 282. A cargo carrier rack is provided above the tail ends of the side covers 275.

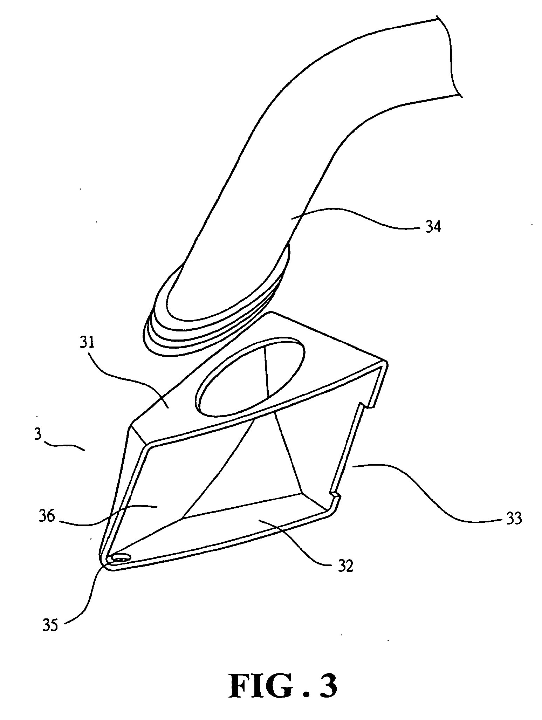

Also referring to Figure 3, the air intake device 3 comprises a box-like, hollow body 31 forming a primary air inlet 32. The body 31 forms a barrier wall 36 opposing to and spaced from the primary inlet 32, and a secondary air inlet 33 at one side of the primary inlet 32. A tube 34 is arranged above the body 31 and is connected to and in communication with an air cleaner 251. A water drain hole 35 is formed in a bottom of the box-like body 31.

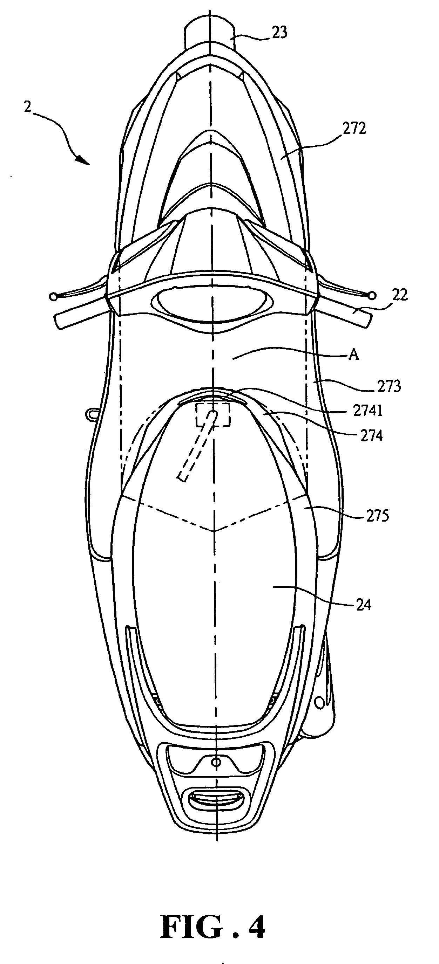

Also referring to Figure 4, the body 31 of the air intake device 3 is arranged at the location of an air entrance 2741 that is defined by a curved zone that is extended from intersections of rearward extensions of side edges of the front cover 272 of the scooter type motorcycle 2 and side edges of the side covers 275 of the rear portion of the scooter type motorcycle 2 in a frontward direction toward the central cover 274.

An air stagnation zone A is formed between the knee shielding cover 271 and the central cover 274.

When the scooter type motorcycle 2 in which the air intake device 3 of the present invention is installed is moving forward or in a frontward direction, a major portion of an airflow that carries dusts and ashes and moves with respect to and toward the scooter type motorcycle 2 is blocked by the knee shielding cover 271 and a portion of the air that contains dusts and ashes and enters the stagnation zone A towers down to leave a clean portion of the air to be drawn into the air inlet 32 of the body 31 due to the negative pressure induced by the air intake device 3. The airflow entering the body 31 is blocked by the barrier wall 36 so as to effect secondary stagnation of the air inside the body 31, whereby dusts and ashes that still entrain the airflow get substantially settled down before the air enters the air cleaner 251. By this arrangement, most of the dusts and ashes entraining the airflow entering the air cleaner 251 is removed and service life of the air cleaner 251, as well as associated filtering net, can be extended. Also, wearing of the engine 25 caused by the dusts and ashes entraining intake air into the engine 25 is reduced.

In extreme cases when the primary air inlet 32 is blocked or jammed by foreign objects (not shown), the secondary air inlet 33 serves as an additional entrance for air flowing to the air cleaner 251.

Water condenses inside the body 31 of the air intake device 3 when humid air that contains water, which often occurs especially in rainy days, flows into body 31. The water droplets condensed on the internal surfaces of the body 31 flow down to the bottom of the body 31 and are then drained through the drain hole 35.

The features of the present invention resides in that the air intake device 3 of the present invention is arranged at the location of the air entrance 2741 that is defined by a curved zone, which is extended from intersections of rearward extensions of the side edges of the front cover 272 of the scooter type motorcycle 2 and side edges of the side covers 275 of the rear portion of the scooter type motorcycle 2 in a frontward direction toward the central cover 274. Thus, the body 31 of the air intake device 3 is located at a position away from where dusts and ashes are lifted by the movement of the scooter type motorcycle 2 and the amount of contaminated air entering into the air cleaner 251 is reduced so that the deterioration of the performance of the air cleaner caused by the accumulation of dusts can be alleviated. In addition, a secondary air inlet 33 is formed in a side wall of the body 31 to serve as a supplemental source of air supply to the air cleaner 251 when the primary air inlet 32 is blocked or jammed.

Further, a water drain hole 35 is defined in the bottom of the body 31 and condensed water or water residual entraining air flow can be discharged through the hole 35.

Although the present invention has been described with reference to the preferred embodiment thereof, it is apparent to those skilled in the art that a variety of modifications and changes may be made without departing from the scope of the present invention which is intended to be defined by the appended claims.

It will be understood that each of the elements described above, or two or more together may also find a useful application in other types of methods differing from the type described above.

## Claims

1. A scooter type motorcycle (2) comprising an engine (25) with an air intake device (3) for an air cleaner (251) comprising a hollow body (31) forming a primary air inlet (32) and a barrier wall (36) opposing the primary air inlet (32), the body (31) being connected to and in fluid communication with the air cleaner (251) by a tube (34), **characterized in that** the air intake device (3) is arranged at a location corresponding to an air entrance that is defined by a curved zone that is extended from intersections of rearward extensions of side edges of a front cover (272) of the scooter type motorcycle (2) comprising the engine (25) and side edges of side covers (275) of the scooter type motor (2) in a frontward direction toward a central cover (274), and the body (31) has one side in which a secondary air inlet (33) is formed and has a bottom in which a water drain hole (35) is defined whereby the air intake device (3) is located away from where dusts are lifted by movement of the scooter type motorcycle to reduce amount of contaminated air flowing into the air cleaner (251).

## Patentansprüche

1. Ein Motorrad vom Roller-Typ (2) bestehend aus einem Motor (25) mit einer Lufteinlassvorrichtung (3) für einen Luftfilter (251) bestehend aus einem Hohlkörper (31), welcher einen primären Lufteinlass (32) und eine Barrierewand (36) gegenüber des primären Lufteinlasses (32) aufweist, wobei der Hohlkörper (31) vermittels einer Röhre (34) in Verbindung und in Fluidkommunikation mit dem Luftfilter (251) steht, und **dadurch gekennzeichnet ist, dass** die Lufteinlassvorrichtung (3) an einer Position angebracht ist, welche mit einer Luftzufuhr korrespondiert, die von einem gebogenen Bereich definiert wird, welcher sich von den Schnittstellen rückwärtiger Verlängerungen von Seitenkanten einer vorderen Abdeckung (272) des Motorrads vom Roller-Typ (2) nach vorne hin in Richtung auf eine zentrale Abdeckung (274) erstreckt und den Motor (25) sowie die Seitenkanten der Seitenabdeckungen (275) umfasst, und bei dem der Hohlkörper (31) eine Seite aufweist, an der ein sekundärer Lufteinlass (33) ausgebildet ist, und außerdem eine Unterseite aufweist, in welcher ein Wasserabflussloch (35) definiert ist, wodurch Lufteinlassvorrichtung (3) von einer Position entfernt untergebracht wird, wo Stäube durch die Bewegung des Motorrades vom Roller-Typ aufgewirbelt werden, so dass sich die Menge der kontaminierten Luft verringert, welche in den Luftfilter (251) strömt.

## Revendications

1. Une moto de type scooter (2) comprenant un moteur (25) avec un dispositif de prise d'air (3) pour un filtre à air (251) comprenant un corps creux (31) formant une arrivée d'air primaire (32) et un muret de séparation (36) opposé à l'arrivée d'air primaire (32), le corps (31) étant connecté et en communication fluide avec le filtre à air (251) à partir d'un tube (34), **caractérisé par** la disposition du dispositif de prise d'air (3) à un endroit correspondant à une entrée d'air définie par une zone incurvée qui est prolongée à partir d'intersections des extensions arrières de bords latéraux d'un couvercle avant (272) de la moto de type scooter (2) comprenant le moteur (25) et des bords latéraux des couvercles latéraux (275) de la moto de type scooter (2) dans le sens avant vers un couvercle central (274), et le corps (31) a un côté dans lequel une arrivée d'air secondaire (33) est formée et a un fond dans lequel un trou de vidange (35) est défini par lequel le dispositif de prise d'air (3) est situé loin d'où les poussières sont soulevées par le mouvement de la moto de type scooter pour réduire la quantité d'air contaminé circulant dans le filtre à air (251).
